# EUROPEAN PATENT APPLICATION

(11) **EP 0 704 638 A1**
(43) Date of publication of application: **03.04.1996**
(21) Application number: 95306516.6
(22) Date of filing: 15.09.1995
(51) Int. Cl.: F16D 65/54

(54) **Automatic brake shoe adjuster**

(30) Priority: 21.09.1994 JP 226586/94
(71) Applicant: NISSHINBO INDUSTRIES INC., Chuo-ku, Tokyo (JP)
(72) Inventor: Fujiwara, Yoichi, c/o Nisshinbo Industries, Inc., Nagoya City, Aichi Pref. (JP)
(74) Representative: Senior, Alan Murray

(57) **Abstract**

An automatic brake shoe adjuster for maintaining correct clearance between a brake drum and linings of brake shoes (3,4) in a drum brake, characterized in a latching system comprising a strut (13) for adjusting the engaging length between the brake shoes (3,4); and a latch member (14) having a fitting hole (14c) into which the strut (13) is fitted in such a way that the latch member (14) is slidable upon the strut (13) only when the axis of the fitting hole (14c) is positioned substantially parallel to the strut (13); otherwise, the latch member (14) is latched to the strut (13).

## Description

### BACKGROUND

### Field of the Invention

This invention relates to an automatic brake shoe adjuster for automatically maintaining correct clearance between a brake drum and linings of brake shoes of a drum brake disposed on a wheel of a car, and particularly to that having simplified structures which allow for reduction of the number of the parts, and easy assembly. The invention also relates to a drum brake in which the above automatic brake shoe adjuster is installed.

### Background of the Art

Automatic brake shoe adjusters correct drum-to-lining clearance as the brake linings wear. According to a typical adjusting mechanism, if there is too much lining clearance, the brake shoes move outward and rotate with the drum enough to operate an adjusting lever which moves the linings closer to the brake drum so that the correct lining-to-drum clearance can be maintained.

The official gazette of Japanese Utility Model Application Laid Open No. 58-106632 (1983), for example, discloses typical automatic shoe adjusters. In these devices, an elongated hole disposed on a slider holder has a taper angle for a slider, in an adjuster apparatus of a drum brake, in which a roller is engaged in the elongated hole in such a way as to freely rotate therein. By making the slider contact a side surface of the slider holder and the roller when the brake shoe retreats to a predetermined degree, an appropriate lining clearance can be maintained.

In the prior apparatuses such as the above-mentioned adjuster, there are drawbacks in that many steps are required for processing and assembling works. Thus, high costs are incurred due to the large number of parts and the complicated structures.

### SUMMARY OF THE INVENTION

The present invention has exploited an automatic adjusting mechanism. An objective of the present invention is to provide an automatic brake shoe adjuster having a simple structure allowing for easy processing and assembly. Another objective of the present invention is to provide a drum brake in which the above automatic brake shoe adjuster is installed.

Namely, one important aspect of the present invention is an automatic brake shoe adjuster for maintaining correct clearance between a brake drum and linings of brake shoes in a drum brake comprising a backing plate, wheel cylinder, brake shoe and linings, return springs, hold-down springs, brake drum, and automatic brake shoe adjuster, said automatic brake shoe adjuster comprising: a strut for adjusting the engaging length between the brake shoes; a latch member having a fitting hole into which said strut is fitted in such a way that said latch member is slidable upon said strut only when the axis of said fitting hole is positioned substantially parallel to said strut; otherwise, said latch member is latched to said strut; a latch spring for pushing said latch member against said strut at such an angle that when the brake shoes are retracted, said latch member latches to said strut; and a latch member adjuster having a window hole bigger than said latch member, in which said latch member is inserted, so as to form a gap in said window hole in which said latch member moves when the brake shoes are engaged, and when said latch member further moves so as to push said latch member to the edge of said gap until the axis of said fitting hole of said latch member is positioned substantially parallel to said strut, said latch member is allowed to slide upon said strut so as to extend the engaging length of the brake shoes, thereby maintaining correct drum-to-lining clearance.

In the above aspect, by using a latching system in which the strut slides to extend the engaging length of the brake shoes only when the brake shoes move far enough to make the axis of the fitting hole of the latch member positioned parallel to the strut to release the latched state of the latch member, it is possible to realize many advantages. For example, the device of the present invention has few parts, has a simple structure, and assembly is very easy. In addition, if the strut or the latch member adjuster is formed integrally with the brake shoe, or attached to the backing plate, or if a combination thereof is employed, the number of the parts can be reduced even more. The present invention is also advantageous in application, i.e., the automatic brake shoe adjuster of the present invention can be applied widely without restriction in the type of drum brakes. For example, the present invention can be applied to brakes of the two-leading type, the dual two-leading type and other types, in addition to the leading-trailing type.

Another important aspect of the present invention is a drum brake comprising: a brake drum for providing a rubbing surface for brake shoe linings; brake shoes for rubbing against the revolving brake drum to produce braking action, said brake shoes having linings provided thereon; a wheel cylinder for forcing said brake shoes out against said brake drum; return springs for pulling said brake shoes away from said brake drum when said wheel cylinder is released; hold-down springs for holding said brake shoes against a backing plate at the home position when said wheel cylinder is released; a backing plate for holding said brake shoes, said wheel cylinder, said return springs, and said hold-down springs; and an automatic brake shoe adjuster for maintaining correct clearance between said brake drum and said linings of said brake shoes, said shoe adjuster comprising: a strut for adjusting the engaging length between said brake shoes; a latch member having a fitting hole into which said strut is fitted in such a way that said latch member is slidable upon said strut only when the axis of said fitting hole is positioned substantially parallel to said strut; otherwise, said latch member is latched to said strut; a latch spring for pushing said latch member against said strut in the direction of retraction of the brake shoes so as to latch said latch member to said strut; and a latch member adjuster having a window hole bigger than said latch member, into which said latch member is inserted, so as to form a gap in said window hole in which said latch member moves when the brake shoes are engaged, and when said latch member further moves so as to push against the edge of said gap until the axis of said fitting hole of said latch member is positioned substantially parallel to said strut, said latch member is allowed to slide upon said strut so as to extend the engaging length of the brake shoes, thereby maintaining correct drum-to-lining clearance.

Based on the above aspect, it is possible to easily and economically assemble a drum brake having a simple structure, composed of fewer parts, particularly with respect to the automatic brake shoe adjuster.

### BRIEF DESCRIPTION OF THE FIGURES

**Figure 1** is a front schematic view showing an embodiment of a drum brake of a leading-trailing type (a brake drum is omitted) equipped with an automatic brake shoe adjuster according to the present invention.

**Figure 2** is a sectional schematic view of the drum brake when cut along the line A-A in **Figure 1.**

**Figure 3** is a sectional plan schematic view of the strut-fitting portion shown in **Figure 1**.

**Figure 4** is a perspective schematic view showing the fitting portion of the strut and a latch member adjuster shown in **Figure 1.**

**Figure 5** depicts the latch spring shown in **Figure 1:** (a) is a schematic plan view of the latch spring; (b) is a schematic elevated view of (a); and (c) is a schematic side view of (b).

**Figure 6** is a fragmentary sectional schematic view showing another embodiment of a latch member engaged with the latch member adjuster and the strut.

**Figure 7** is a fragmentary sectional schematic view showing another embodiment of an automatic brake shoe adjuster according to the present invention, in which a latch member adjuster is attached to the backing plate, and a strut is formed integrally with one brake shoe.

**Figure 8** is a fragmentary sectional schematic view showing still another embodiment of an automatic brake shoe adjuster according to the present invention, in which a strut is formed integrally with the other brake shoe.

**Figure 9** is a front schematic view showing an embodiment$ in which the present invention is applied to a two-leading type drum brake (the brake drum is omitted).

**Figure 10** is a sectional schematic view of the drum brake when cut along the line B-B in **Figure 9.**

### DETAILED DESCRIPTION OF THE PREFERRED EMBODIMENTS

In the automatic brake shoe adjuster of the present invention, an advantageous latch mechanism is adopted. The latch member and the strut are latched due to the friction between the strut and the edge of the fitting hole of the latch member which is constantly pressed upon the strut in one direction by the latch spring, and when the latch member is pushed in the opposite direction by the latch member adjuster due to an increased engaging length of the brake shoe, the edge of the fitting hole detaches from the strut, thereby releasing the latched state. An engaging stroke of the brake shoe which does not cause the above mechanism is predetermined by the size of the window hole of the latch member adjuster. The latch member is smaller than the window hole of the latch member adjuster communicated with the movement of the brake shoe, and thus the brake shoe can reciprocally move in the window hole without causing the latch member to push the window hole. Only when the brake shoe need to move farther to engage with the brake drum to stop the revolution of the brake drum due to brake shoe lining wear, for example, the latch member is pushed by the edge of the window hole of the latch member adjuster, thereby releasing the latched state and moving the latch member in the direction of the movement of the brake shoe until the brake shoe can engage the brake drum. When the brake shoe returns to the home position due to the return springs, the latched state between the latch member and the strut is resumed. Any structure which allows for the above-mentioned mechanism can be adapted to the present invention. In the adjusting mechanism comprising the latch member, latch member adjuster, latch spring, and strut, as mentioned above, the number of parts are significantly small, the construction is very simple and the assembling performance is excellent.

The adjusting mechanism of the present invention can be installed to link both brake shoes, or each brake shoe and the backing plate (fixed point). If the strut is formed integrally with the brake shoe, and the latch member adjuster is formed integrally with the opposite brake shoe, or if the strut is attached to the backing plate, and the latch member adjuster is formed integrally with the brake shoe, or if the strut is formed integrally with the brake shoe, and the latch member adjuster is attached to the backing plate, the number of the parts can be reduced more significantly. In the present invention, parts other than the automatic brake shoe adjuster, such as a backing plat, wheel cylinder, brake shoe and linings, return springs, hold-down springs, and brake drum, can be conventional parts. Further, any modification obvious to one of ordinary skill in the art can be adapted to the drum brake of the present invention. The present invention can be applied to drum brakes of the two-leading type, the dual two-leading type and other types in addition to the leading-trailing type.

### EXAMPLE

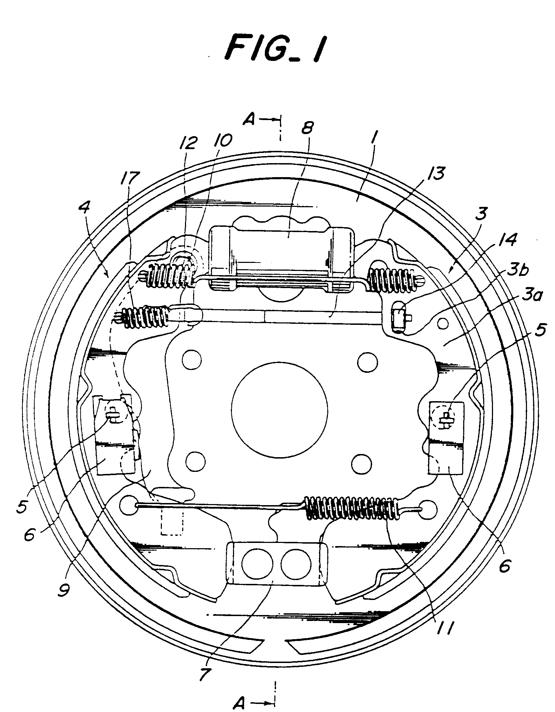

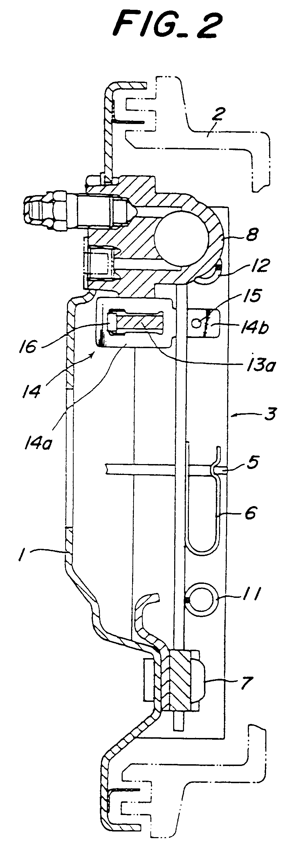

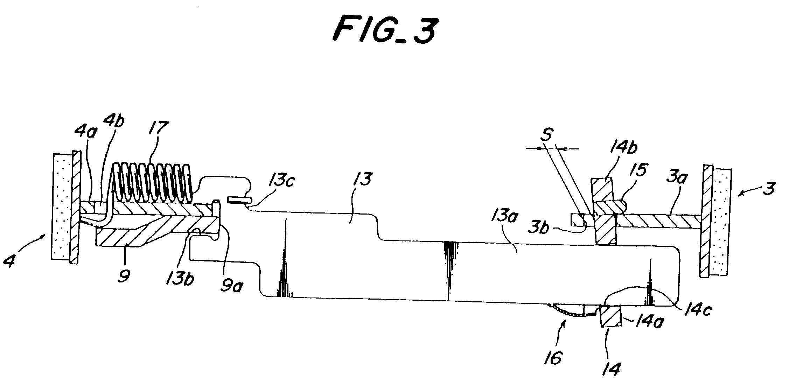

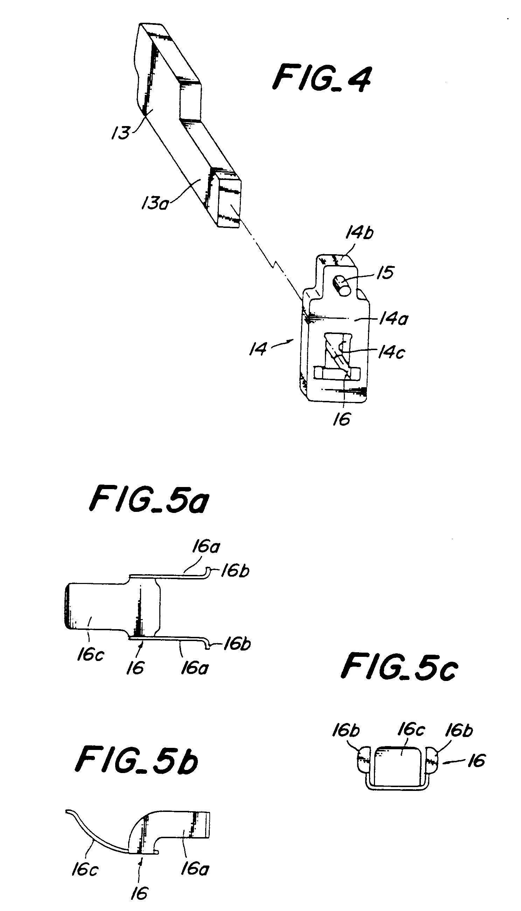

Embodiments of the present invention will be explained hereinafter with reference to the drawings. Figures 1 to 5 show a first embodiment in which the present invention is applied to a drum brake of the leading trailing type. Figure 1 is a front schematic view showing an embodiment of a drum brake of a leading-trailing type (the brake drum is omitted) equipped with an automatic brake shoe adjuster according to the present invention. Figure 2 is a sectional schematic view of the drum brake when cut along the line A-A in Figure 1. Figure 3 is a sectional plan schematic view of the strut-fitting portion shown in Figure 1. Figure 4 is a perspective schematic view showing the fitting portion of the strut and a latch member adjuster shown in Figure 1. Figure 5 depicts the latch spring shown in Figure 1: (a) is a schematic plan view of the latch spring; (b) is a schematic elevated view of (a); and (c) is a schematic side view of (b).

In the drawings, brake shoes 3 and 4 are disposed face-to-face on a backing plate 1 in such a way that linings of the brake shoes are positioned outward. The lower ends of the brake shoes 3 and 4 are held by an anchor 7 attached to the backing plate 1 between the brake shoes 3 and 4. The wheel cylinder 8 is attached to the backing plate 1 between the upper edges of the brake shoes 3 and 4. The brake shoes 3 and 4 are held by shoe hold-down pins 5 and shoe hold-down springs 6 on the backing plate 1 within a brake drum 2 (refer to Fig. 2) in such a way that the brake shoes 3 and 4 can move from the home position to a degree sufficient to rub against the revolving brake drum to produce braking action when the wheel cylinder 8 forces the brake shoes 3 and 4 out, and the brake shoes 3 and 4 return to the home position by shoe return springs 11 and 12 bridging the brake shoes 3 and 4 when the force of the wheel cylinder 8 is released. A brake lever 9 is pivoted by an upper-end portion thereof on a shaft 10 provided on an upper end portion of the brake shoe 4. A lower-end portion of the brake level 9 is adapted to be trailed by a mechanical operation means through an operational cable (not shown).

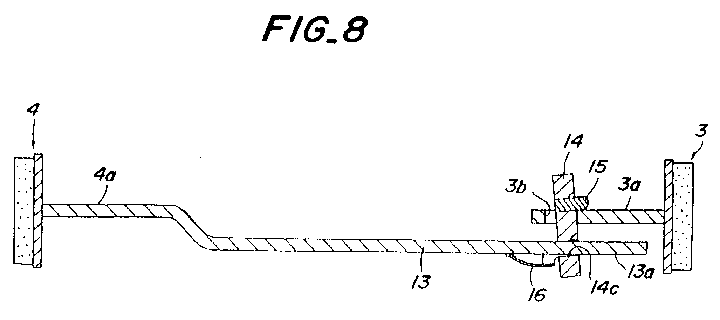

In this embodiment, a strut 13 is provided as an adjusting mechanism disposed between the brake shoe 3 and a member opposed to the brake shoe 3, i.e., the brake lever 9 (or the brake shoe 4 as shown in Figure 8). As shown in Figures 3 and 4, the strut made of a flat plate has a fitting portion 13a, which has a rectangular cross-section on one end, i.e., the right side in Fig. 3, and has a web 4a of the brake shoe 4 and a notch 13b accommodating a side edge 9a of the brake lever 9 on the opposite end, i.e., the left side in Fig. 3.

As shown in Figure 4, a latch member 14 is provided with a protruding piece 14b on one end of a rectangular plate-like base portion 14a (the upper portion in Fig. 4). This protruding piece 14b is inserted into a window hole 3b disposed on a web 3a of the brake shoe 3 as shown in Fig. 3, and is prevented from slipping out of the window hole 3b by plunging a pin 15 into the protruding portion thereof by means of a press fitting, a caulking, a welding or the like. In this embodiment, the web 3a functions as a latch member adjuster for pushing and sliding the latch member 14 upon the fitting portion 13a of the strut 13 to adjust the engaging length of the brake shoes 3 and 4. The window hole 3b is such a size that the brake shoe 3 can reciprocally move in the window hole 3b without causing the latch member 14 to push the edge of the window hole 3b. Only when the brake shoes 3 and 4 need to move further to engage with the brake drum to stop the revolution of the brake drum due to the brake shoe lining wear, for example, the latch member 14 is pushed by the edge of the window hole of the latch member adjuster. A gap S in Figure 3 between the edge of the window hole 3b and the protruding piece 14b should be defined by the above mechanism. Further, a fitting hole 14c is formed on the base portion 14a, into which the fitting portion 13a of the strut 13 is fitted (Figure 4).

As shown in Figures 2-4, a latch spring 16 is inserted into the fitting hole 14c, and exerts pressure on the latch member 14 to rotate in a counter-clockwise direction with respect to the strut 13 in Fig. 3. This latch spring 16 is formed in such a manner that a plate spring is bent as shown in Fig. 5. The latch spring 16 is composed of an insert portion 16a to be inserted into the fitting hole 14c, a stopper portion 16b to fix the latch spring 16 to the latch member 14, and a tongue-like curved spring plate portion 16c to exert pressure on the latch member 14 in one direction so that the latch member 14 leans on the fitting portion 13a of the strut 13. A pothook-like joint is constituted by the fitting portion 13a of the strut 13, the latch member 14 and the latch spring 16. In addition, as shown in Fig. 1 and Fig. 3, an anti-rattle spring 17 is disposed tightly between the hole 4b of the web 4a of the brake shoe 4 and a concave portion 13c of the strut 13, and pulls the strut 13 to the side of the brake shoe 4, and brings the notch 13b of the strut 13 in contact with the brake lever 9.

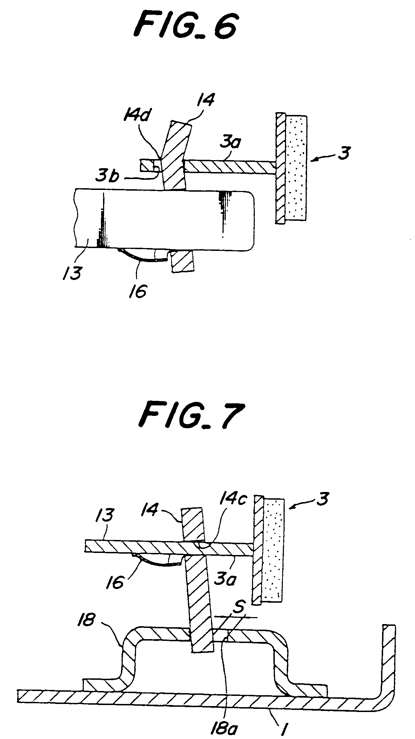

Figure 6 is a fragmentary sectional schematic view showing another embodiment of a latch member engaged with the latch member adjuster and the strut. In this Figure, the latch member 14 is intended to prevent the latch member 14 from being slipped out, by bending an upper portion 14d of the latch member 14 and engaging it with the edge of the window hole 13b of the shoe web 3a, instead of the pin 15 fixed onto the latch member 14 in Figs 3-4.

Figure 7 is a fragmentary sectional schematic view showing another embodiment of an automatic brake shoe adjuster according to the present invention, in which a latch member adjuster is attached to the backing plate, and a strut member is formed integrally with one brake shoe. In this embodiment, the shoe web 3a is fitted into the latch member 14 through the fitting hole 14c so as to form a pothook-like structure. The lower portion of the latch member 14 in Fig. 7 is inserted into a window hole 18a of a bracket 18 (latch member adjuster) attached on the backing plate 1, thereby forming a gap S as in Figure 3. In this embodiment, the bracket 18 functions as a latch member adjuster for pushing and sliding the latch member 14 upon the strut member 13 to adjust the engaging length of the brake shoes 3 and 4. Incidentally, in this embodiment, instead of the bracket 18, the backing plate 1 can be directly used as a latch member adjuster having a window hole.

Figure 8 is a fragmentary sectional schematic view showing still another embodiment of an automatic brake shoe adjuster according to the present invention, in which a strut member is formed integrally with the opposite brake shoe 4 which is the member opposed to the one brake shoe 3. That is, the strut 13 is formed by extending the shoe web 4a of the opposite brake shoe 4, and the fitting portion 13a of this strut 13 is engaged in a pothook-like manner with the fitting hole 14c of the latch member 14.

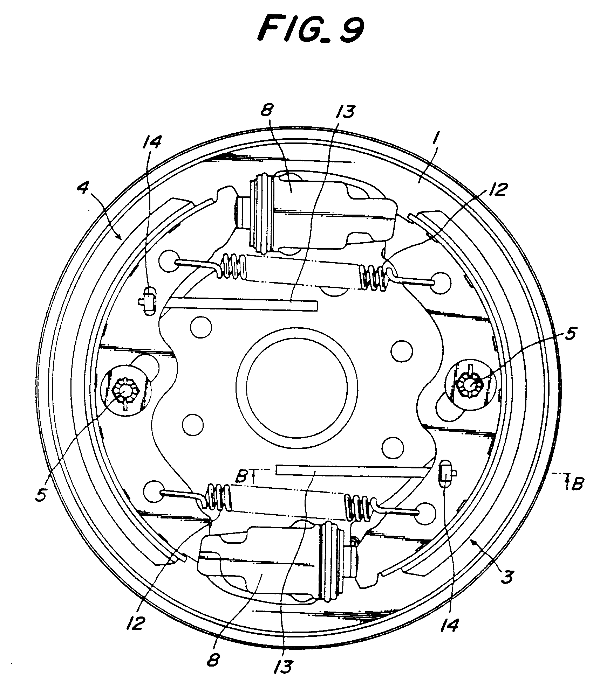

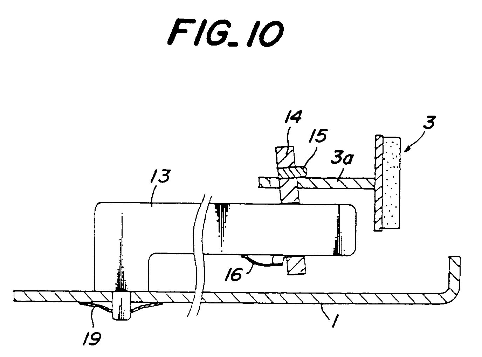

Figure 9 is a front schematic view showing an embodiment in which the present invention is applied to a two-leading type drum brake (the brake drum is omitted). Figure 10 is a sectional schematic view of the drum brake when cut along the line B-B in Figure 9. Each automatic brake shoe adjuster comprising the strut 13, the latch member 14 and the other parts is disposed between the corresponding brake shoe and the backing plate 1 which is the member opposed to them. In this embodiment, the strut member 13 is attached pivotally to the backing plate 1 using a retainer 19 so as to associate with an enlargement of the brake shoes 3 and 4. Incidentally, in a case where the present invention is applied to a drum brake of the dual two-leading type, a construction similar to those shown in Fig. 9 and Fig. 10 can be employed. In the present invention, the automatic brake adjuster can also be installed between the brake shoe 3 and the wheel cylinder 8, between the brake shoe 3 and the brake lever 9, rather than between the brake shoe 3 and the backing plate 1 or the opposite brake shoe 4.

Further, sectional shapes of the strut member 13 and the fitting portion 13a thereof can be various shapes other than rectangular, and can be made into any desired shape such as a circle or an ellipse. However, it is necessary that the fitting hole 14c of the latch member 14 is also of a shape matching the fitting portion 13a of the strut member 13. Further, if the friction coefficient between the fitting portion 13a of the strut member 13 and the fitting hole 14c of the latch member 14 is made high by at least one of the fitting portion 13a and the fitting hole 14c, for example, if a high-friction material is coated on the surface or if the surface is made uneven, the engagement between the latch member and the strut member 13 is made more securely. Further, the latch spring 16 can be formed by using a line spring or a synthetic resin in various shapes in addition to that shown in Fig. 5. In short, any structure in which the latch member 14 is pushed against the strut member 13 at an angle, thereby engaging the latch mechanism, can be adapted to the present invention.

A drum-to-lining clearance-maintaining mechanism (i.e., the engaging length adjusting mechanism) according to the present invention constituted as mentioned above will be explained hereafter. When the brake is actuated and thereby a pressurized liquid is introduced into the wheel cylinder, pistons on both sides thereof are operated, and both brake shoes 3 and 4 move outward. At that time, the strut 13 is pulled to the side of the opposite brake shoe 4 due to the effect of an anti-rattle spring 17 and contacts the brake lever 9. Accordingly, the strut 13 moves to the left side in Fig. 1, integrally with the opposite brake shoe 4. When the clearance between the brake drum 2 and the brake shoe 3 reaches or exceeds a predetermined level, the brake shoe 3 moves further to the right side in Fig. 1 to a degree more than the gap between the latch member 14 and the edge of the window hole 3b of the shoe web 3a. The latch member 14 is then rotated slightly clockwise in Fig. 3: thereby, a pothook-like engagement between the fitting portion 13a of the strut 13 and the edge of the fitting hole 14c of the latch member 14 is released, and the latch member 14 slides upon the fitting portion 13a of the strut 13 in the direction in which the engaging length thereof is extended.

When the brake is released, both brake shoes 3 and 4 retracts due to the effects of the shoe return springs 11 and 12. However, when clockwise rotational force in Fig. 3 due to the extension of the brake shoes 3 and 4 is released, the latch member 14 is pushed to be angled counter-clockwise due to the effect of the latch spring 16. Thereby, the fitting portion 13a of the strut 13 and the fitting hole 14c of the latch member 14 are latched again in a pothook-like manner where the engaging length of the brake shoes is extended, thereby changing the home position of the brake shoes 3 and 4. Accordingly, the clearance between the drum 2 and the brake shoes 3 and 4 is corrected automatically. In this way, according to the present invention, it is possible to maintain a predetermined drum-to-lining clearance without steps.

## Claims

1. An automatic brake shoe adjuster for maintaining correct clearance between a brake drum and linings of brake shoes in a drum brake comprising a backing plat, wheel cylinder, brake shoe and linings, return springs, hold-down springs, brake drum, and automatic brake shoe adjuster, said automatic brake shoe adjuster comprising:
a strut for adjusting the engaging length between the brake shoes;
a latch member having a fitting hole into which said strut is fitted in such a way that said latch member is slidable upon said strut only when the axis of said fitting hole is positioned substantially parallel to said strut; otherwise, said latch member is latched to said strut;
a latch spring for pushing said latch member against said strut in the direction of retraction of the brake shoes so as to latch said latch member to said strut; and
a latch member adjuster having a hole bigger than said latch member, into which said latch member is inserted, so as to form a gap in said hole in which said latch member moves when the brake shoes are engaged, and when said latch member further moves so as to push against the edge of said gap until the axis of said fitting hole of said latch member is positioned substantially parallel to said strut, said latch member is allowed to slide upon said strut so as to extend the engaging length of the brake shoes, thereby maintaining correct drum-to-lining clearance.

2. The automatic brake shoe adjuster according to Claim 1, wherein said strut is connected to one brake shoe, and said latch member adjuster is connected to the opposite brake shoe.

3. The automatic brake shoe adjuster according to Claim 1, wherein said strut is connected to one brake shoe, and said latch member adjuster is attached to the backing plate of the drum brake.

4. The automatic brake shoe adjuster according to Claim 1, wherein said strut is attached to the backing plate, and said latch member adjuster is connected to one brake shoe.

5. A drum brake comprising:
a brake drum for providing a rubbing surface for brake shoe linings;
brake shoes for rubbing against the revolving brake drum to produce braking action, said brake shoes having linings provided thereon;
a wheel cylinder for forcing said brake shoes out against said brake drum;
return springs for pulling said brake shoes away from said brake drum when said wheel cylinder is released;
hold-down springs for holding said brake shoes against a backing plate at the home position when said wheel cylinder is released;
a backing plate for holding said brake shoes, said wheel cylinder, said return springs, and said hold-down springs; and
an automatic brake shoe adjuster for maintaining correct clearance between said brake drum and said linings of said brake shoes, said shoe adjuster comprising:
a strut for adjusting the engaging length between said brake shoes;
a latch member having a fitting hole into which said strut is fitted in such a way that said latch member is slidable upon said strut only when the axis of said fitting hole is positioned substantially parallel to said strut; otherwise, said latch member is latched to said strut;
a latch spring for pushing said latch member against said strut in the direction of retraction of the brake shoes so as to latch said latch member to said strut; and
a latch member adjuster having a hole bigger than said latch member, into which said latch member is inserted, so as to form a gap in said hole in which said latch member moves when the brake shoes are engaged, and when said latch member further moves so as to push against the edge of said gap until the axis of said fitting hole of said latch member is positioned substantially parallel to said strut, said latch member is allowed to slide upon said strut so as to extending the engaging length of the brake shoes, thereby maintaining correct drum-to-lining clearance.

6. The drum brake according to Claim 5, wherein, in said automatic brake shoe adjuster, said strut is connected to one brake shoe, and said latch member adjuster is connected to the opposite brake shoe.

7. The drum brake according to Claim 5, wherein, in said automatic brake shoe adjuster, said strut is connected to one brake shoe, and said latch member adjuster is attached to the backing plate of the drum brake.

8. The drum brake according to Claim 5, wherein, in said automatic brake shoe adjuster, said strut of said automatic brake shoe adjuster is attached to the backing plate, and said latch member adjuster is connected to one brake shoe.
